# FASCICULE DE BREVET EUROPEEN

(11) **EP 3 865 328 B1**
(45) Date de publication et mention de la délivrance du brevet: **04.01.2023**
(21) Numéro de dépôt: 21156808.4
(22) Date de dépôt: 12.02.2021
(51) Int. Cl.: B60K 1/00

(54) **MOTOREDUCTEUR DE TRACTION POUR VEHICULE ET PROCEDE D'ASSEMBLAGE CORRESPONDANT**
TRAKTIONS-GETRIEBEMOTOR FÜR FAHRZEUG UND ENTSPRECHENDES ZUSAMMENBAUVERFAHREN
TRACTION GEAR MOTOR FOR A VEHICLE AND CORRESPONDING ASSEMBLY METHOD

(30) Priorité: 13.02.2020 FR 2001430
(43) Date de publication de la demande: 18.08.2021
(73) Titulaire: Renault s.a.s, 92100 Boulogne Billancourt (FR)
(72) Inventeur: MARCHAL, Nicolas, 78330 Le Fleury (FR); THIOLIERE, David, 28320 Gallardon (FR)
(74) Mandataire: Renault Group

(56) Documents cités:
- US-A- 5 832 789
- US-A1- 2003 037 976
- US-A1- 2004 130 224

## Description

La présente invention se rapporte aux motoréducteurs de véhicule.

Plus précisément, elle a pour objet un motoréducteur de traction pour véhicule routier, regroupant dans un carter en plusieurs éléments, une machine électrique composée d'un stator et d'un rotor tournant dans des roulements supportés par le carter, une denture d'entraînement primaire portée par l'arbre du rotor, et une denture secondaire transmettant le mouvement de la denture primaire sur un différentiel.

Elle a également pour objet le procédé d'assemblage d'un tel motoréducteur.

Les motoréducteurs utilisés dans les véhicules électriques ou hybrides, comprennent une machine électrique entraînant l'arbre d'entrée d'un réducteur de vitesses assurant la démultiplication du mouvement de la machine électrique transmis à la chaîne cinématique du véhicule en direction des roues de celui-ci.

Selon une disposition habituelle, le stator et le rotor de la machine électrique, ainsi que l'arbre d'entraînement du réducteur sont logés dans un carter. Le rotor assemblé est généralement composé d'un arbre, ainsi que d'un ensemble de bobinages. Il se prolonge par l'arbre d'entrée du réducteur, portant une denture primaire, entraînant des engrenages de réduction. L'ensemble est fermé par des éléments de carters rapportés.

Lors de l'assemblage, le rotor est introduit axialement dans le carter avec ses roulements, qui trouvent leur place dans des paliers de roulement prévus dans les carters. En l'absence de précautions particulières, la denture d'entraînement, le rotor, ou les roulements, peuvent heurter le stator ou des parties du carter lors de son introduction, avec un risque de dégradation irréversible de ces différents éléments. Il existe donc un besoin essentiel d'assurer la protection des composants du motoréducteur et des éléments de carter lors de l'assemblage. US 2004/130224 A1 divulgue le motoréducteur de traction selon le préambule de la revendication 1.

La présente invention a pour but de faciliter l'assemblage d'un motoréducteur, tout en assurant la protection de ses composants contre les chocs.

Dans ce but, un de ses éléments de carter présente une avancée radiale se rapprochant de la denture primaire sur une partie de sa circonférence.

De préférence, l'avancée radiale présente une ouverture libérant un espace suffisant pour loger la denture secondaire.

Selon une autre caractéristique, l'avancée radiale constitue une portée cylindrique de guidage pour un élément de protection amovible, coiffant la denture primaire lors de l'introduction du rotor dans l'élément de carter.

Lors de l'assemblage, le rotor est introduit dans le carter machine avec ses roulements, coiffé du protecteur amovible.

Ce protecteur assure le centrage du rotor dans le carter machine, en étant guidé le long de la portée cylindrique de l'avancée radiale.

La présente invention sera mieux comprise à la lecture de la description suivante d'un mode de réalisation non limitatif de celle-ci, en se reportant aux dessins annexés.
[fig.1] montre l'architecture générale d'un motoréducteur 1 conforme à l'invention.
[fig.2] également.
[fig.3] est un schéma simplifié du même motoréducteur.
[fig.3A] est une coupe selon A-A de la figure 3.
[fig.4A] met en évidence les risques de heurts lors de son assemblage.
[fig.4B] également.
[fig.4C] également.
[fig.5A] montre une étape d'assemblage du motoréducteur avec son dispositif de protection.
[fig.5B] également.
[fig.5C] montre une étape de fermeture du carter.
[fig.5D] également.

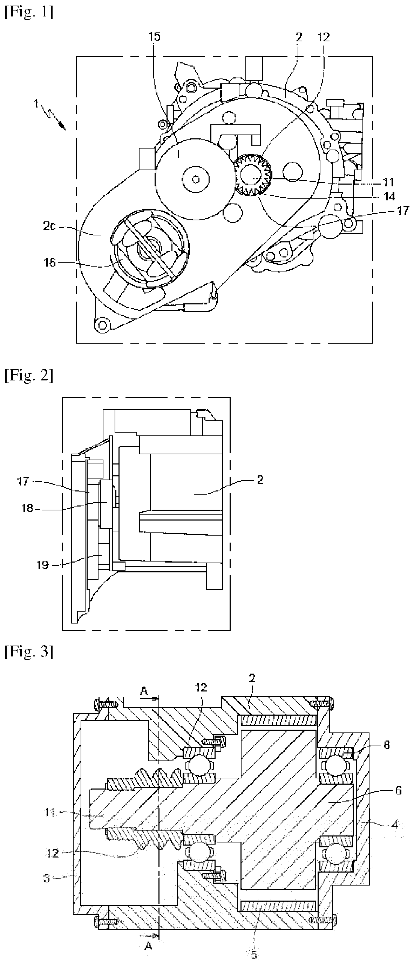

Les figures 1 et 2 montrent un motoréducteur 1, sans son carter de mécanisme 2. Il s'agit d'un motoréducteur de traction pour véhicule. Il regroupe dans un carter en plusieurs éléments 2, 3, 4, une machine électrique composée d'un stator et d'un rotor, qui tourne dans des roulements supportés par le carter. Le carter renferme également une denture d'entraînement primaire 12 portée par l'arbre 11 du rotor 5, et une denture secondaire 15 transmettant le mouvement de la denture primaire 12 sur un différentiel 16. Sur la figure 1, on voit le plan de couture du carter de la machine électrique, (ou carter machine 2). La surface 2c correspond à une coupe du carter au niveau de la surface de centrage 17 cylindrique d'un protecteur 14, autour de la denture 12 de l'arbre rotor 11. La surface de centrage 17 ne s'étend pas sur 360°, pour laisser passer la denture 15 de l'arbre secondaire. Le plan de coupe laisse également apparaître une partie du différentiel 16.

La figure 2 est une vue latérale, ouverte du motoréducteur 1. On voit le profil intérieur du carter machine 2, la surface de guidage 17, ainsi que les paliers 18, 19, de l'arbre de rotor 11, et de l'arbre secondaire.

Les schémas simplifiés suivants illustrent l'architecture du même motoréducteur et son assemblage. Le carter complet comporte trois parties :
- un carter machine 2 supportant le stator 5 de la machine électrique, et un roulement 7 du rotor 6,
- un carter de mécanisme 3 coiffant le carter machine 2 autour des dentures primaire 12 et secondaire 15, et
- un carter de fermeture 4 sur le rotor 6, supportant un des roulements 8 de celui-ci.

Le rotor 6 tourne dans deux roulements 7, 8, qui sont supportés par des logements ou paliers 9, 10, formés dans la masse du carter machine 2 et du carter de fermeture 4. L'arbre du rotor 11 s'étend à l'extérieur du premier roulement 7. Il porte la denture d'entraînement primaire 12. La denture 12 peut être rendue solidaire de l'arbre 11 du rotor par des cannelures et /ou par un frettage lisse sur une partie de sa longueur. Elle transmet le couple généré sur le rotor, sur la ligne secondaire (denture 15), puis sur le différentiel 16. Son immobilisation axiale sur l'arbre 11, est assurée par un clip 13. On voit également sur le schéma, une plaque 21 retenant la bague extérieure 7a du premier roulement 7 sur le carter machine 2.

Les paliers 9, 10 des roulements 7, 8 s'étendent sur 360 dans les carters machine et de fermeture 2, 4. A gauche du premier roulement 7, le carter machine 2 présente une avancée radiale 2a, se rapprochant de la denture primaire 12 sur une partie de sa circonférence. Cette avancée radiale 2a présente dans sa partie inférieure, une ouverture 2b, qui libère un espace suffisant pour loger la denture secondaire 15.

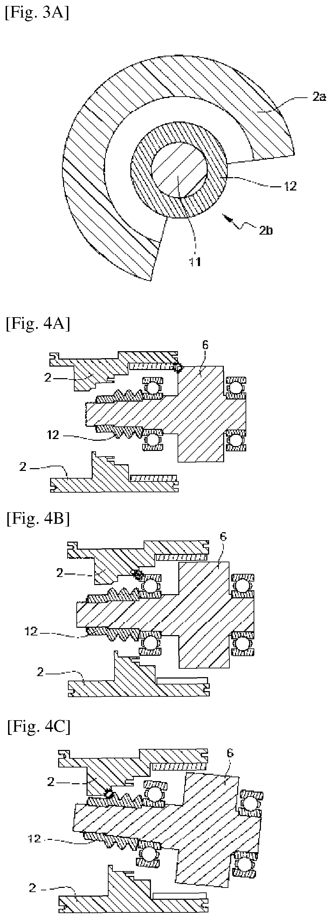

Sur la coupe 3A de la figure 3, on retrouve l'arbre de rotor 11, sa denture 12, un espace libre, et le carter machine 2, au niveau de l'avancée radiale 2a. L'avancée 2a du carter mécanisme s'étend approximativement sur les trois quarts de sa circonférence, en couvrant par exemple autour de 230°.

Dans le mode de réalisation non limitatif illustré par les figures, l'avancée radiale 2a est ainsi ouverte sur environ un quart de sa circonférence. Elle correspond à la portée de guidage cylindrique 17, identifiée sur a figure 1.

Les figures 4A à 4C mettent en évidence, comment un défaut d'axialité ou l'inclinaison du rotor 6 par rapport au carter machine 2, peut se traduire lors de l'assemblage par des chocs à plusieurs niveaux :
- entre le rotor 6 et le stator 5( figure 4A),
- entre le premier roulement 7 et l'entrée de son palier 9 (figure 4B), ou
- entre la denture 12 et l'avancée 2a du carter machine 2 (figure 4C).

Le moyen proposé pour éviter ces risques, est d'utiliser l'élément de protection amovible (ou protecteur amovible 14), qui est engagé sur l'extrémité de l'arbre de rotor 11, avant l'introduction de la machine dans son carter 2.

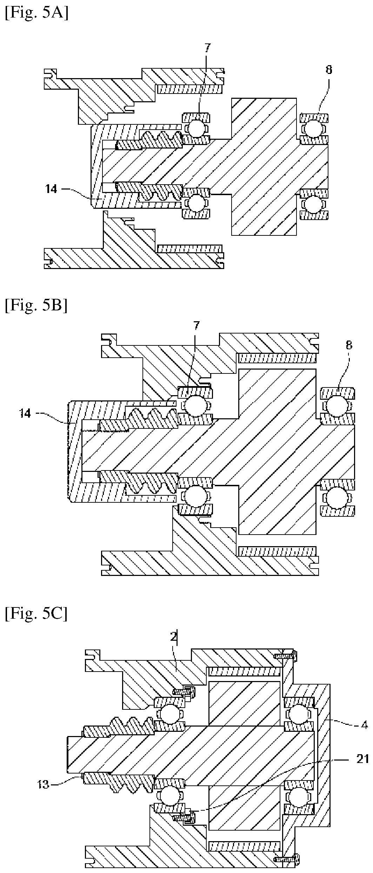

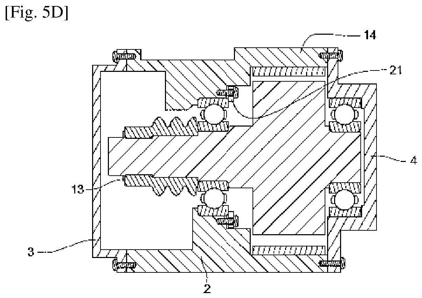

Les figures 5A à 5D, illustrent le montage du motoréducteur, avec l'aide du protecteur 14. L'avancée 2a constitue une portée cylindrique de guidage 17 pour ce protecteur 14, qui coiffe la denture primaire 12 lors de l'introduction du rotor 6 dans le carter machine 2 (figures 5A, 5B). Le protecteur 14 peut ensuite être retiré. L'assemblage se poursuit par la fermeture du carter machine 2 par le carter de fermeture 4 sur sa droite (figure 5C), et par le carter de mécanisme 3 sur sa gauche (figure 5D).

L'architecture proposée présente des particularités par rapport aux motoréducteurs connus, car plusieurs composants sont intégrés, en particulier le stator 5, qui est monté et fixé sur le carter machine 2, pour constituer un premier sous-ensemble du motoréducteur 1. Le rotor 6 peut ainsi être introduit dans le carter machine 2 avec ses roulements 7, 8, en étant coiffé de son protecteur 14. le protecteur 14 assure le centrage du rotor 6 dans le carter machine 2 en étant guidé le long de la portée cylindrique 17 de l'avancée radiale 2a.

Les roulements 7, 8 et la denture 12, sont assemblés sur le rotor, pour constituer un deuxième sous ensemble. Son introduction dans le premier s'effectue sans heurts, grâce au protecteur 14, qui est guidé par la surface 17 lors de cette opération. Enfin, l'évidement 2b sur une partie de la circonférence de l'avancée radiale 2a du carter machine, libère un espace suffisant pour loger la denture 15 de la ligne secondaire.

Le protecteur 14 est un outil de montage, qui joue un rôle essentiel pour protéger la denture primaire 12 contre les chocs lors de l'assemblage, en guidant le rotor sur la portée de l'avancée 2a usinée dans le carter machine. Il est centré sur le rotor par la portée cylindrique 17, et se positionne axialement en butée sur l'extrémité de l'arbre de rotor 11. Le centrage ne se fait pas sur toute sa périphérie, car le carter doit permettre le passage de la denture de l'arbre secondaire. Cela n'affecte pas la qualité du centrage, entre le protecteur et le carter machine.

Lorsque le rotor est positionné dans le carter machine, on peut enlever le protecteur 14. A ce stade, le carter est encore ouvert sur sa gauche et sur sa droite. On peut aussi visser la plaque de retenue 21 du roulement 7 sur le carter machine 2, avant la mise en place du carter de fermeture 4. Les dernières étapes de l'assemblage, sont le montage du carter de fermeture 4, et du carter mécanisme 3.

Le principal intérêt du motoréducteur proposé, est la facilité et la fiabilité de son assemblage, grâce au protecteur amovible 14, et à l'aménagement du carter réalisé au niveau de l'avancée radiale 2a du carter machine. L'impact est faible sur le produit, étant donné que le protecteur est retiré avant de fermer l'ensemble : les aménagements se limitent à prévoir les surfaces de centrage sur la denture, et sur le carter machine. La solution est donc facile à mettre en place. De plus, la qualité du centrage est excellente, car la chaîne de cotes de centrage entre le rotor et le carter machine est directe grâce au protecteur.

## Revendications

1. Motoréducteur de traction (1) pour véhicule regroupant dans un carter en plusieurs éléments (2, 3, 4) une machine électrique composée d'un stator et d'un rotor (6) tournant dans des roulements supportés (7, 8) par le carter, une denture d'entraînement primaire (12) portée par l'arbre (11) du rotor (5), et une denture secondaire (15) transmettant le mouvement de la denture primaire sur un différentiel (16), **caractérisé en ce qu'**un des élément de carter (2) présente une avancée radiale (2a) se rapprochant de la denture primaire (12) sur une partie de sa circonférence **caractérisé en ce que** l'avancée radiale (2a) constitue une portée cylindrique de guidage (17) pour élément de protection amovible (14) coiffant la denture primaire (12), lors de l'introduction du rotor (6) dans l'élément de carter (2).

2. Motoréducteur selon la revendication 1, caractérisé en ce l'avancée radiale (2a) de l'élément de carter (2) présente une ouverture (2b) libérant un espace suffisant pour loger la denture secondaire (15).

3. Motoréducteur selon la revendication 1, **caractérisé en ce que** l'avancée radiale (2a) est ouverte sur environ un quart de sa circonférence.

4. Motoréducteur selon l'une des revendications précédentes, **caractérisé en ce qu'**il comprend un carter machine (2) supportant le stator (5) de la machine électrique, et un roulement (7) du rotor (6).

5. Motoréducteur selon la revendication précédente, **caractérisé en ce qu'**il comprend un carter de mécanisme (3) se coiffant le carter machine (2) autour des dentures primaire (12) et secondaire (15).

6. Motoréducteur selon la revendication 4 ou 5, **caractérisé en ce qu'**il comprend un carter de fermeture (4) sur le rotor (6), supportant un des roulements (8) de celui-ci.

7. Procédé d'assemblage du motoréducteur selon l'une des revendications 1 à 5, **caractérisé en ce que** le rotor (6) est introduit dans le carter machine (2) avec ses roulements (7, 8), et en étant coiffé de son protecteur (14).

8. Procédé d'assemblage selon la revendication précédente, **caractérisé en ce que** le protecteur (14) assure le centrage du rotor (6) dans le carter machine (2) en étant guidé le long de la portée cylindrique (17) de l'avancée radiale (2a).

9. Procédé d'assemblage selon la revendication 7 ou 8, **caractérisé en ce qu'**on visse une plaque de retenue (21) d'un (7) sur le carter machine (2) avant la mise en place du carter de fermeture (4) sur celui-ci.

## Patentansprüche

1. Traktionsgetriebemotor (1) für ein Fahrzeug, das in einem Gehäuse aus mehreren Elementen (2, 3, 4) Folgendes zusammenfasst: eine elektrische Maschine, die aus einem Stator und einem Rotor (6), der sich in vom Gehäuse getragenen Lagern (7, 8) dreht, zusammengesetzt ist, eine von der Welle (11) des Rotors (5) getragene primäre Antriebszahnung (12) und eine sekundäre Zahnung (15), die die Bewegung der primären Zahnung auf ein Differential (16) überträgt, **dadurch gekennzeichnet, dass** eines der Gehäuseelemente (2) einen radialen Vorsprung (2a) aufweist, der sich der primären Zahnung (12) über einen Teil ihres Umfangs nähert, **dadurch gekennzeichnet, dass** der radiale Vorsprung (2a) eine zylindrische Führungsauflage (17) für ein abnehmbares Schutzelement (14) bildet, das die primäre Zahnung (12) bei der Einführung des Rotors (6) in das Gehäuseelement (2) überdeckt.

2. Getriebemotor nach Anspruch 1, **dadurch gekennzeichnet, dass** der radiale Vorsprung (2a) des Gehäuseelements (2) eine Öffnung (2b) aufweist, die einen für die Aufnahme der sekundären Zahnung (15) ausreichenden Raum freigibt.

3. Getriebemotor nach Anspruch 1, **dadurch gekennzeichnet, dass** der radiale Vorsprung (2a) über etwa ein Viertel seines Umfangs offen ist.

4. Getriebemotor nach einem der vorangehenden Ansprüche, **dadurch gekennzeichnet, dass** er ein Maschinengehäuse (2), das der Stator (5) der elektrischen Maschine trägt, und ein Lager (7) des Rotors (6) umfasst.

5. Getriebemotor nach dem vorangehenden Anspruch, **dadurch gekennzeichnet, dass** er ein Mechanismusgehäuse (3) umfasst, das sich um die primäre (12) und die sekundäre Zahnung (15) herum über das Maschinengehäuse (2) stülpt.

6. Getriebemotor nach Anspruch 4 oder 5, **dadurch gekennzeichnet, dass** er ein Verschlussgehäuse (4) über dem Rotor (6) umfasst, das eines der Lager (8) desselben trägt.

7. Verfahren zur Montage des Getriebemotors nach einem der Ansprüche 1 bis 5, **dadurch gekennzeichnet, dass** der Rotor (6) mit seinen Lagern (7, 8) in das Maschinengehäuse (2) eingeführt und sein Schutz (14) darübergestülpt wird.

8. Montageverfahren nach dem vorangehenden Anspruch, **dadurch gekennzeichnet, dass** der Schutz (14) die Zentrierung des Rotors (6) im Maschinengehäuse (2) gewährleistet, indem er entlang der zylindrischen Auflage (17) des radialen Vorsprungs (2a) geführt wird.

9. Montageverfahren nach Anspruch 7 oder 8, **dadurch gekennzeichnet, dass** eine Halteplatte (21) eines (7) auf das Maschinengehäuse (2) geschraubt wird, bevor das Verschlussgehäuse (4) auf dieses gesetzt wird.

## Claims

1. Geared traction motor (1) for a vehicle that combines, in a casing made of multiple elements (2, 3, 4), an electric machine composed of a stator and a rotor (6) rotating in ball bearings (7, 8) supported by the casing, a primary drive toothset (12) borne by the shaft (11) of the rotor (5), and a secondary toothset (15) transmitting the movement of the primary toothset to a differential (16), **characterized in that** one of the casing elements (2) has a radial extension (2a) that gets closer to the primary toothset (12) over part of its circumference, **characterized in that** the radial extension (2a) constitutes a cylindrical guide face (17) for a removable protective element (14) capping the primary toothset (12) when the rotor (6) is introduced into the casing element (2).

2. Geared motor according to Claim 1, **characterized in that** the radial extension (2a) of the casing element (2) has an opening (2b) freeing up enough space to receive the secondary toothset (15).

3. Geared motor according to Claim 1, **characterized in that** the radial extension (2a) is open over approximately one quarter of its circumference.

4. Geared motor according to one of the preceding claims, **characterized in that** it comprises a machine casing (2) supporting the stator (5) of the electric machine, and a ball bearing (7) of the rotor (6).

5. Geared motor according to the preceding claim, **characterized in that** it comprises a mechanism casing (3) capping the machine casing (2) around the primary toothset (12) and secondary toothset (15).

6. Geared motor according to Claim 4 or 5, **characterized in that** it comprises a closure casing (4) on the rotor (6), supporting one of the ball bearings (8) thereof.

7. Method for assembling the geared motor according to one of Claims 1 to 5, **characterized in that** the rotor (6) is introduced into the machine casing (2) with its ball bearings (7, 8), in the process being capped by its protector (14).

8. Assembly method according to the preceding claim, **characterized in that** the protector (14) ensures the centring of the rotor (6) in the machine casing (2) by being guided along the cylindrical face (17) of the radial extension (2a).

9. Assembly method according to Claim 7 or 8, **characterized in that** a retaining plate (21) of a (7) is screwed to the machine casing (2) before the closure casing (4) is put in place thereon.
